# EUROPEAN PATENT APPLICATION

(11) **EP 1 335 205 A2**
(43) Date of publication of application: **13.08.2003**
(21) Application number: 02021692.5
(22) Date of filing: 27.09.2002
(51) Int. Cl.: G01N 35/10

(54) **Automatic analyzing apparatus**

(30) Priority: 06.02.2002 JP 2002028906
(71) Applicant: Hitachi High-Technologies Corporation, Tokyo (JP)
(72) Inventor: Takahashi, Katsuaki, Hitachinaka-shi, Ibaraki 312-0032 (JP)
(74) Representative: Strehl Schübel-Hopf & Partner

(57) **Abstract**

Disclosed is an automatic analyzing apparatus for analyzing a biological sample such as urine or blood, the analyser integrating the mechanisms of a dispenser (2) and an agitator (4) to reduce the number of parts. In an automatic analyzing apparatus of the type for analyzing a sample by dispensing the sample and a reagent into a reaction container and by agitating and mixing the sample and the reagent, an agitating motor head is mounted on a sampling arm so that the sampling mechanism is also used as an agitating arm turning mechanism and a vertical moving mechanism. Water for cleaning the reaction container is injected by a reagent dispensing probe.

## Description

### BACKGROUND OF THE INVENTION

### 1. FIELD OF THE INVENTION

The present invention relates to an automatic analyzing apparatus for analyzing a sample such as blood or urine and, more particularly, to an automatic analyzing apparatus provided with a dispensing mechanism suited for a small-sized automatic analyzing apparatus.

### 2. DESCRIPTION OF THE RELATED ART

In the automatic analyzing apparatus, a sample and a reagent are dispensed into reaction containers arrayed in a row and are agitated and mixed, and the absorbance is measured to analyze the concentration. The reaction container having been analyzed are usually cleaned and reused. In the automatic analyzing apparatus of the related art, a mechanism for dispensing the sample, a mechanism for dispensing the reagent, a mechanism for agitating a reaction liquid and a mechanism for cleaning the reaction containers are usually operated as completely independent mechanism units. However, a small-sized automatic analyzing apparatus is required to reduce the cost, and the possible cost reduction is limited if the mechanism units are independent. In Unexamined Published Japanese Patent Application No. 148166/1988, there is disclosed a mechanism for causing the agitations by providing the leading end portion of a dispensing nozzle with agitating blades and by moving the dispensing nozzle upward and downward in the liquid to be agitated. By this mechanism, the dispensing nozzle is also used as the agitating mechanism so that a smaller size and a lower cost of the apparatus is expected. This technical concept of using the dispensing nozzle as the agitating mechanism is employed in a number of known techniques such as Unexamined Published Japanese Patent Application Nos. 5-40123, 5-215755 and so on.

Samples and reagents of different kinds are dispensed by using a common dispensing nozzle. After one sample and one reagent are dispensed, therefore, the nozzle leading end portion has to be sufficiently cleaned and prepared for subsequent dispensations. In the related art, however, the dispensing nozzle is provided with the agitating blades. Unless a novel cleaning mechanism is devised, however, the agitating blades of a complicated structure may be partially left uncleaned, causing contamination between the samples and the reagents. In order to solve these problems of the related art, the present invention has an object to provide a small-sized automatic analyzing apparatus at a low cost without any problem of contamination.

### SUMMARY OF THE INVENTION

In the present invention, the parts are reduced by attaching an agitating rod turning head to a sample dispensing arm to turn and move the agitating rod turning head by turning the sample dispensing arm and the lifting mechanism. The parts are further reduced by dispensing and sucking the cleaning liquid of the reaction container by a probe for dispensing the reagent. The present invention is useful in a small-sized apparatus having low processing capacity. The key feature of this means for solving the above problem is that since the apparatus of a low treating capacity has a long cycle time and accordingly a long time period during which the mechanisms are stopped (or left idle), other actions are done during this idle time period.

### BRIEF DESCRIPTION OF THE DRAWINGS

Fig. 1 shows an embodiment in which an agitating motor head is mounted on a sample dispensing arm;
Fig. 2 shows an embodiment in which a reaction container cleaning liquid is injected by a reagent dispensing probe; and
Fig. 3 shows a time chart of the present invention.

### DESCRIPTION OF THE PREFERRED EMBODIMENTS

The embodiments of the invention will be described in the following with reference to the Drawings.

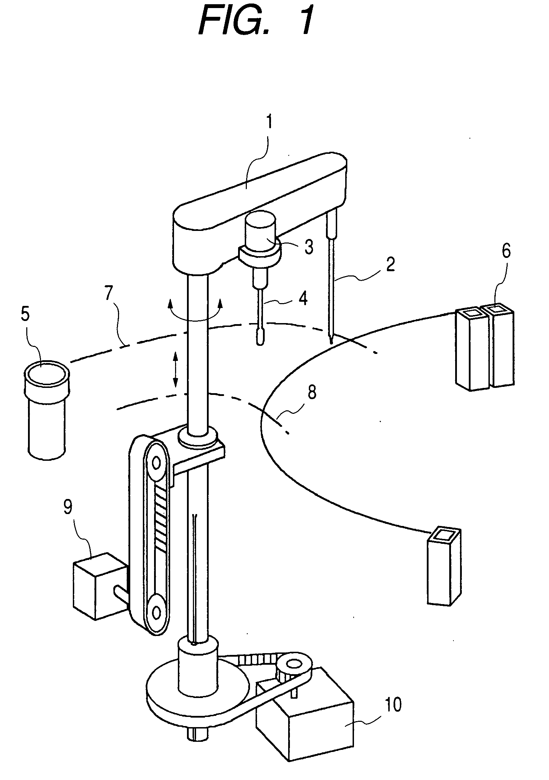

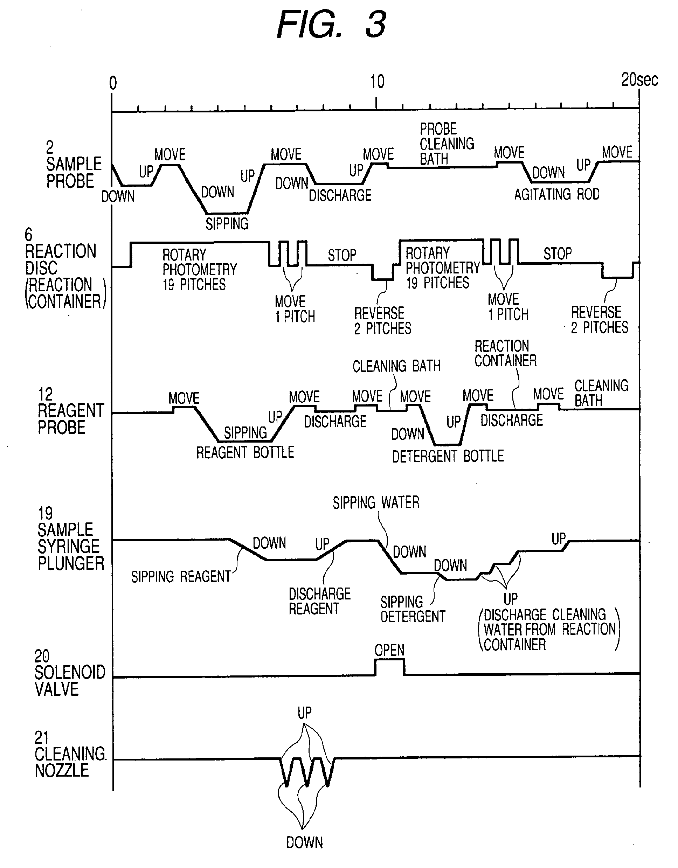

Fig. 1 shows an embodiment in which an agitating rod and its turning motor are attached to a sample dispensing arm so that the arcuate motions and vertical motions of an agitating rod turning head may be used as the arcuate motions and vertical motions of a sample dispensing mechanism. A sample dispensing probe 2 is moved so that it is above a sample container 5 by a turning motor 10 of an S-arm 1 and downward by a vertical motion motor 9. After having sucked the sample, the probe 2 is moved upward, turned so that it is above a reaction container 6; is moved downward into the reaction container, and the sample is discharged into the container; and the probe is then returned to a sample probe cleaning bath (not shown) to clean the inside and outside of the probe. At this time, an agitating motor head 3 moves together with the S-arm 1, but the agitating rod will not abut against any obstacle because the agitating motor head 3 is mounted midway on the arm so that its turning radius 8 is different from a turning radius 7 of the probe and because the agitating rod is shorter than the sample dispensing probe. When according to the time schedule agitation is necessary, an agitating rod 4 is moved so that it is above the reaction container by the sample dispensing arm turning motor 10 and is moved downward by the vertical motion motor 9. The agitating rod 4 is turned by the agitating motor and is then moved to and cleaned by an agitating rod cleaning bath (not shown). It is necessary to open a hole in a cover or the like, so that the sample dispensing probe 2 may not abut against an obstacle when it is moved downward into the reaction container or the cleaning bath. The parts for the drive mechanism to turn and move up and down the sample dispensing probe and the agitating rod head are thus shared so that their number can be drastically reduced. Fig. 3 shows a time chart for common use of the parts of Fig. 1 in the apparatus, with a cycle of 20 seconds.

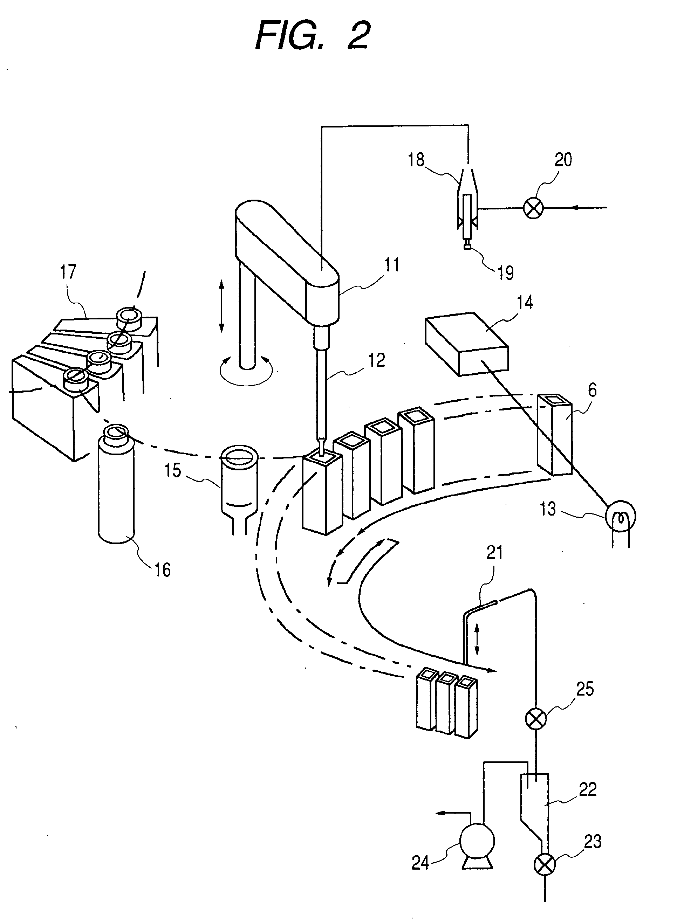

Fig. 2 shows an embodiment in which cleaning water is injected into a reaction container by the reagent dispensing probe.

Fig. 3 shows a time chart of the case in which the operations shown in Fig. 2 are carried out in an apparatus cycle of 20 seconds. Reaction containers are disposed at 37 positions in the reaction disc and are advanced to the next container thirty eight times (19 + 19) in one cycle of 20 seconds so that the container advances by one each cycle. While this reaction disc is being turned, the absorbance of the reaction liquid is measured by a photometer 14 at the instant when the axis of a beam emitted from a light source lamp 13 passes through a container.

The reagent probe is moved downward into a reagent bottle 17 to suck a reagent. The reagent probe moves so that it is over the reaction container and discharges the reagent. When the reagent probe returns to the cleaning bath 15, a solenoid valve 20 is opened to feed water thereby to cleane the inside and outside of the probe. While the water is being fed, the plunger 19 of a reagent syringe 18 is moved downward to suck water 320 mL into the reagent syringe 18. After this, the reagent probe is moved to a detergent bottle 16 to suck a detergent of 10 micro-liters into its tip. The probe is moved to over the reaction container to extrude water 100 mL, thereby injecting the detergent in a diluted state into the reaction container. With the probe remaining over the reaction container, the reaction disc is turned by 1 pitch, and the plunger 19 is moved upward to inject water 110 mL. This water is rather pure, because the detergent at the tip of the probe has been extruded by the water toward the rear so that the probe has been cleaned. This water injection is repeated once more so that the cleaning liquid is resultantly injected into three containers, and the reaction disk is returned by 2 pitches and is turned by 19 pitches. The cleaning liquid in the reaction container is sucked by a cleaning nozzle 21 disposed at the opposite position 180 degrees removed. By these repetitions, one reaction container is seen to be cleaned in three steps.

Here will be described the effects which are intrinsic to the embodiment of Fig. 2 and Fig. 3. As seen from Fig. 2, only one vertically movable suction nozzle is disposed as the cleaning nozzle 21 for the reaction containers. This means that the multistage operations of the cleaning nozzles of the apparatus of the related art can performed in completely independent operations through simple control by the present embodiment. If there are multiple cleaning nozzles for multiple stages which are independently controlled as in the apparatus of the related art, the same number of motors or independent drive mechanisms of the number as the nozzles are required which raises the price greatly. The advantages in the independent control of the cleaning nozzles include the extension of reaction times (to two turns of the reaction disc), a method for facilitating the re-inspection by dispensing are-inspection sample in advance into the reaction containers, or a method for improving the photometric precision by inserting one dust-free container for use as the reaction container to prevent drift.

The effects of the present embodiment are very great because the cleaning nozzle is independently driven by one motor, the minimum necessary number in this embodiment.

In the case of an apparatus with low processing capacity (e.g., a cycle of about 40 seconds), moreover, the sample dispensing probe and the reagent dispensing probe can be shared in the embodiments of Fig. 1 and Fig. 2 so that the number of parts can be further drastically reduced.

According to the present invention, it is possible to use components of the mechanism for dispensing the sample for agitating the reaction liquid, for dispensing the reagent and for cleaning the reaction containers as well. Therefore, the number of parts can be drastically reduced, thereby improving reliability and lowering cost.

## Claims

1. An automatic analyzing apparatus for dispensing a sample and a reagent into a reaction container, agitating and mixing them to cause reaction, and measuring the results, wherein
a sample dispensing nozzle or a reagent dispensing nozzle and an agitating rod are held by a common arm.

2. An automatic analyzing apparatus for dispensing a sample and a reagent into a reaction container, agitating and mixing them to cause reaction, and measuring the results, wheren
said reaction container is cleaned and reused after used for the measurement; and a cleaning liquid to be used for cleaning said reaction container is fed to the reaction container to be cleaned by the sample dispensing mechanism or the reagent dispensing mechanism.

3. An automatic analyzing apparatus for dispensing a sample and a reagent into a reaction container, agitating and mixing them to cause reaction, and measuring the results, wherein
the dispensation of the sample and the dispensation of the reagent are done by using one dispensing nozzle; and an arm for holding said dispensing nozzle holds an agitating rod as well.

4. An automatic analyzing apparatus as set forth in Claim 3, wherein said dispensing nozzle is constructed to dispense a cleaning liquid of said reaction container as well.

5. An automatic analyzing apparatus dispensing a sample and a reagent into a reaction container, agitating and mixing them to cause reaction, measuring the results, and cleaning the reaction container after measurement for reuse, wherein
the cleaning liquid of the reaction container is sucked by suction nozzles fewer in number than the number of times of sucking the cleaning liquid from one reaction container.
